# EUROPÄISCHE PATENTANMELDUNG

(11) **EP 1 693 120 A2**
(43) Veröffentlichungstag der Anmeldung: **23.08.2006**
(21) Anmeldenummer: 06001313.3
(22) Anmeldetag: 23.01.2006
(51) Int. Cl.: B08B 1/00

(54) **Kehranlage**

(30) Priorität: 16.02.2005 DE 102005007200
(71) Anmelder: Baumgartner, Hans, 94360 Mitterfels (DE)
(72) Erfinder: Baumgartner, Hans, 94360 Mitterfels (DE)
(74) Vertreter: Mühlbauer, Robert

(57) **Zusammenfassung**

Die Erfindung betrifft eine Kehranlage (100) zum Abkehren und/oder Reinigen von Solarmodulen (6) von Solaranlagen, umfassend mindestens ein bewegbares Kehrelement (25) und eine Vorrichtung (101) zum Bewegen des Kehrelements.

Die Erfindung betrifft ferner eine Solaranlage, die dadurch gekennzeichnet ist, dass sie eine erfindungsgemäße Kehranlage (100) aufweist.

## Beschreibung

Die vorliegende Erfindung betrifft eine Kehranlage zum Abkehren und/oder Reinigung von Solarmodulen von Solaranlagen, umfassend mindestens ein bewegbares Kehrelement und eine Vorrichtung zum Bewegen des Kehrelements.

Der Wirkungsgrad von Solaranlagen wird häufig dadurch reduziert, dass Feststoffe auf die Solarmodule der Solaranlagen gelangen und dadurch weniger bis überhaupt kein Sonnenlicht auf die Solarzellen der Solarmodule gelangt. In den Wintermonaten stellt Schnee, welcher sich auf den Solarmodulen sammelt, das Hauptproblem dar, da Schnee die Solarmodule häufig komplett vom Sonnenlicht abschotten und somit keine Wassererwärmung bzw. Stromerzeugung durch die Solaranlage möglich ist. Dies ist besonders bei den Photovoltaik-Anlagen ein Nachteil, weil bei tieferen Temperaturen der Wirkungsgrad der Module (Silizium) sehr hoch ist.

Im Frühjahr und im Sommer herrscht zum Teil starker Pollenflug, wobei sich die Pollen auf den Solarmodulen der Solaranlagen niederschlagen und den Lichtdurchtritt zu den Solarzellen stark behindern. In Spätsommer- und Herbstmonaten stellt der Laubfall ebenfalls ein Problem dar, da die Blätter, welche sich an den Solarmodulen ansammeln, das Licht ebenfalls von den Solarzellen der Solarmodule abhalten. Schmutzpartikel aufgrund von Umwelteinflüssen sind das ganze Jahr über in der Luft vorhanden und lagern sich ebenfalls auf den Modulen ab.

In der bisherigen Praxis werden die oben genannten Feststoffe, die sich auf den Solarmodulen niederschlagen, per Hand beispielsweise mit Handbesen von den Solarmodulen gekehrt bzw. mit Hilfe von Wasserschläuchen abgespült. Dies birgt verschiedene Nachteile, wie beispielsweise eine erhöhte Unfallgefahr beim Besteigen von Hausdächern zum Abkehren von Schnee oder eine Gefahr der Beschädigung der Module.

Aufgabe der Erfindung ist es, die Nachteile des Standes der Technik zu überwinden.

Diese Aufgabe wird durch eine Kehranlage zum Abkehren und/oder Reinigen von Solarmodulen von Solaranlagen umfassend mindestens ein bewegbares Kehrelement und eine Vorrichtung zum Bewegen des Kehrelements gelöst.

Vorzugsweise ist das Kehrelement in mindestens zwei, vorzugsweise zwei, entgegengesetzte Richtungen bewegbar.

Vorzugsweise weist die erfindungsgemäße Kehranlage mindestens eine Vorrichtung zum Befestigen an einem festen Untergrund, insbesondere an einem mit Solarmodulen bestückten Untergrund, vorzugsweise einem Dach, auf. Dadurch kann die erfindungsgemäße Kehranlage dauerhaft an beispielsweise einem mit Solarmodulen bestückten Dach angebracht werden.

Mit Vorteil ist das Kehrelement länglich ausgebildet, vorzugsweise ein länglicher Besen. Dieser Besen kann beispielsweise PVC-Haare oder tierische Haare, wie beispielsweise Rosshaare, aufweisen. Das Kehrelement kann auch eine Gummilippe aufweisen. Mit dieser Gummilippe kann beispielsweise Waschwasser von den Solarmodulen abgezogen werden.
Statt Besenhaaren kann das Kehrelement auch einen massiven Gummi aufweisen.

Bei einer besonders bevorzugten Ausführungsform der erfindungsgemäßen Kehranlage ist die Vorrichtung zum Bewegen des Kehrelements motorbetrieben. Vorzugsweise ist der Motor ein Rohrmotor, welcher in einem Metallrohr eingebracht ist.

Mit Vorteil weist die Vorrichtung zum Bewegen des Kehrelements ein Gegenzugsystem auf und ist mit dem Kehrelement vorzugsweise durch mindestens ein Seil, vorzugsweise ein Stahlseil, verbunden.

Bei einer besonders bevorzugten Ausführungsform der erfindungsgemäßen Kehranlage wird die Kehranlage automatisch über eine Sensorik gesteuert. Dies hat den großen Vorteil, dass vom Anlagenbetreiber nicht mehr kontrolliert werden muss, ob sich bestimmte Feststoffe auf den Solarmodulen angesammelt haben. Fängt es beispielsweise im Winter an zu schneien, so wird der auftreffende Schnee von der Sensorik registriert und die Kehranlage beginnt automatisch mit dem Betrieb.

Mit Vorteil weist die Kehranlage einen Schneesensor auf. Die Kehranlage kann auch einen Regensensor und einen Temperaturfühler aufweisen. Auch durch diese Anordnung kann Schneeablagerung registriert werden, indem der auftreffende Schnee an einer bestimmten Stelle, welche erwärmt ist, zum Schmelzen gebracht wird und an dieser Stelle das geschmolzene Wasser durch einen Regensensor erkannt wird. Durch den Temperaturfühler kann gemessen werden, ob sich die Außentemperatur oberhalb oder unterhalb des Gefrierpunkts bewegt. Bei Temperaturen von ca. 0 Grad oder weniger wird die Kehranlage automatisch in Betrieb gesetzt.

Die Sensorik kann auch ein Lichtsensor sein, welche die, auf die Module auftreffende Lichtmenge registriert.

Mit Vorteil weist die Kehranlage eine Vorrichtung zum Aufbringen von Wasser oder Reinigungslösung auf. Diese Vorrichtung zum Aufbringen von Wasser oder Reinigungslösung kann einen Tank zum Speichern von Wasser oder Reinigungslösung und eine Leitung für das Wasser oder die Reinigungslösung aufweisen. Der Vorteil einer solchen Vorrichtung ist, dass beispielsweise Verschmutzungen wie Blütenstaub noch einfacher entfernt werden können, indem zunächst Wasser oder Reinigungslösung auf die Solarmodule gespritzt wird und anschließend das Wasser bzw. die Reinigungslösung zusammen mit den Verschmutzungen weg gekehrt bzw. gezogen werden.

Die Erfindung betrifft ferner eine Solaranlage, welche dadurch gekennzeichnet ist, dass sie eine erfindungsgemäße Kehranlage aufweist.

Weitere Einzelheiten und Merkmale der Erfindung ergeben sich aus der nachfolgenden Beschreibung von bevorzugten Ausführungsformen der Erfindung in Verbindung mit den Zeichnungen und den Unteransprüchen. Hierbei können die jeweiligen Merkmale für sich allein oder zu mehreren in Kombination miteinander verwirklicht sein.

In den Zeichnungen zeigen:
- Figur 1:: Eine Seitenansicht einer erfindungsgemäßen Kehranlage;
- Figur 2:: Einen Querschnitt durch die Kehranlage nach Figur 1 (Schnitt A → A);
- Figur 3:: Eine Draufsicht auf die Kehranlage nach Figur 1.

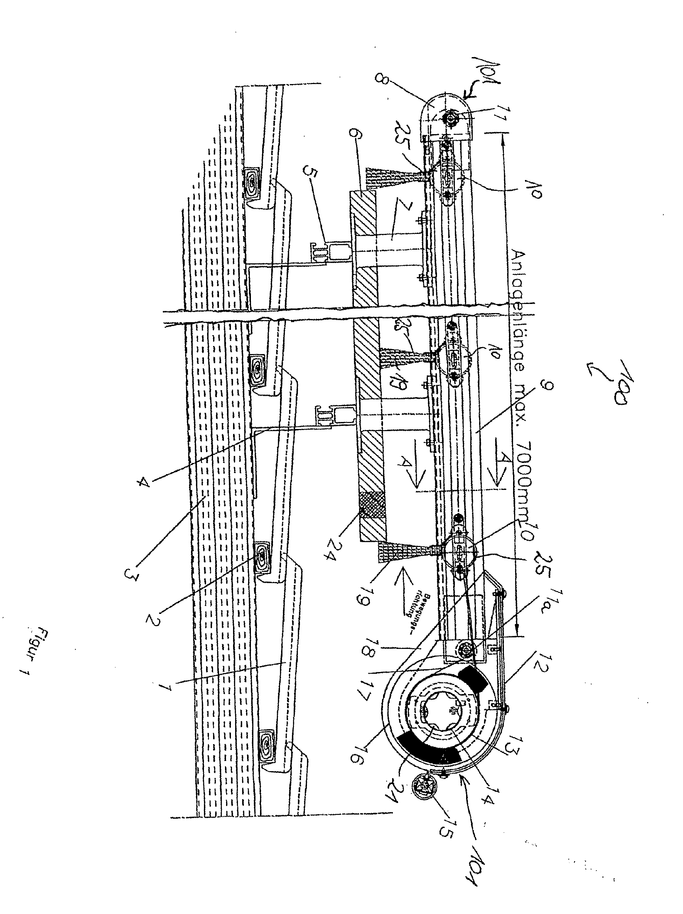

Figur 1 zeigt eine Seitenansicht einer erfindungsgemäßen Kehranlage 100. Die Kehranlage 100 ist an einem Dach befestigt. In dieser Zeichnung sind Dachplatten 1, Dachlatten 2 sowie Dachbalken 3 des Daches dargestellt. An den Dachbalken 3 sind Schienenbefestigungen 4 mit Aufnahmeschienen 5 der Photovoltaikmodule 6 angebracht. Die Kehranlage 100 wird auf den Befestigungsschienen 5 montiert. Die Abstandhalter 7 bewirken einen gewissen Abstand zwischen der Kehranlage 100 und den Photovoltaikmodulen 6. Die Abstandhalter 7 bestehen aus Aluminiumguß.
Die Kehranlage 100 weist eine Vorrichtung 101 zum Bewegen eines Kehrelements 25 auf. Im oberen Bereich der Kehranlage 100 weist die Vorrichtung101 eine Gegenzugmechanik 102 auf (hier nicht gut zu sehen). In diesem Bereich weist die Kehranlage 100 eine Blende 12 zur Abdeckung der Gegenzugmechanik 102 auf, um diese vor Umwelteinfltissen, wie beispielsweise Wasser, zu schützen. Die Gegenzugmechanik 102 besteht im Wesentlichen aus einer verzinkten Stahlwelle 14 mit eingebautem Rohrmotor 21 inklusive Motorkonsole 18 und einer Aluwelle 13 mit integrierter Federmechanik. Die Stahlwelle 14 weist einen Außendurchmesser von 63mm und eine Wandstärke von 1,5 mm auf. Die Aluwelle weist einen Durchmesser von 120 mm und eine Wandstärke von 3 mm auf.

An der Stahlwelle 14 sind zwei Stück Gurtscheiben 16 angebracht. Diese Gurtscheiben dienen jeweils als Aufnahme für ein Gurtband 17.

Die Kehranlage 100 weist des weiteren ein Kehrelement 25 in Form eines Alurohrs 10 mit daran Befestigter Besenborte 19 auf.
In der Zeichnung ist die Bewegung des Kehrelements 25 in drei Stationen dargestellt. In der ersten Stellung (rechts) trifft die Besenborte gerade auf ein Photovoltaikmodul 6. Dabei ragt die Besenborte 19 etwas über den oberen Rand des Photovoltaikmoduls 6 hinab. Im zweiten Kehrstadium (Mitte) befindet sich die Besenborte auf einem Photovoltalkmodul 6. Im dritten Kehrstadium (links) hat die Besenborte das abgekehrte Photovoltaikmodul 6 verlassen. Anschließend setzt sich das Kehrelement 25 wieder in die entgegengesetzte Richtung in Bewegung, bis ein Kehrzyklus abgeschlossen ist.

Das Gurtband 17 ist an der Gurtscheibe 16 befestigt und in der Führungsschiene 9 in der kompletten Länge bis zum unteren Ende geführt. Am unteren Ende wird es an einer Endkappe 8 mit Hilfe einer Umlenkrolle 11 wieder bis zum Gleitschlitten 23 der Kehrelementbefestigung zurück geführt und ist dort befestigt. Eine ähnliche Rolle 11a befindet sich auch im Bereich der Gegenzugmechanik. Befindet sich das Rohr 10 ganz oben (rechts, im Bereich der Gegenzugmechanik), ist das Gurtband 17 komplett auf der Gurtscheibe 16 aufgewickelt. Auf der Aluwelle 13 ist ein Stahlseil 20 befestigt und aufgerollt, wobei ein Ende des Stahlseils 20 am Rohr 10 befestigt ist. Bei beginnender Drehbewegung des Rohrmotors 21 setzt sich das Rohr 10 mit der Besenborte 19 (Kehrelement 24) in Richtung "Bewegungsrichtung" in Bewegung. Gleichzeitig wird die Welle 13 in Drehbewegung versetzt, wobei somit immer eine Gegenkraft zur Bewegungsrichtung vorhanden ist. Dies ermöglicht einen extrem ruhigen Lauf und es wäre möglich, die Anlage 100 im extremsten Fall waagerecht zu installieren, da die Funktion eine rein mechanische Bewegung darstellt und somit die Schwerkraft vernachlässigt werden kann.

Im Bereich der Gegenzugmechanik 102 weist die erfindungsgemäße Anlage 100 eine Steckerkupplung 15 mit Steckerschutzrohr aus Aluminium auf. Die Endkappe 8 besteht aus Aluminiumguss. Die Umlenkrolle 11 besteht aus Kunststoff. Die Gurtscheibe zur Gurtbandaufnahme 16 besteht ebenfalls aus Kunststoff. Die Besenborte besteht in diesem Ausführungsbeispiel ebenfalls aus Kunststoff.

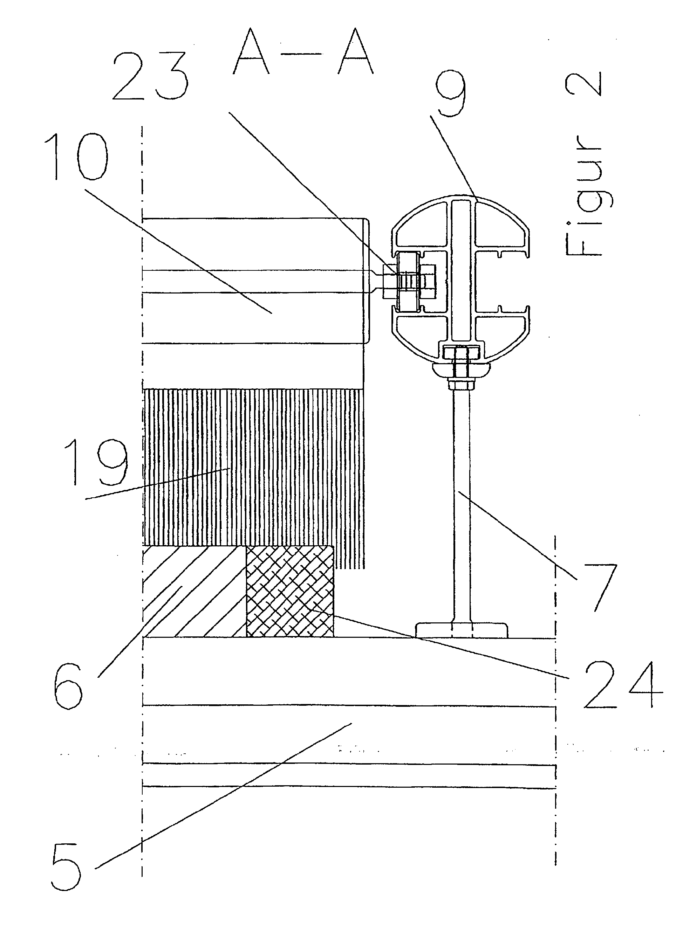

Figur 2 zeigt einen Querschnitt durch ,die Kehranlage 100 (Schnitt entlang der Linie A → A). Gleiche Bezugszeichen wie in Figur 1 kennzeichnen gleiche Elemente wie in Figur 1. Gut zu erkennen ist in dieser Zeichnung der Gleitschlitten 23 der Kehrelementbefestigung. Der Gleitschlitten 23 weist zwei Kugellager auf. Die Besenborte 19 kehrt über das Photovoltaikmodul 6. Der Abstandhalter 7 gewährt den richtigen Abstand zwischen dem Rohr 10 und dem Photovoltaikmodul 6. Die nicht über das Photovoltaikanlage 6 streichenden Haare der Besenborte 19 ragen etwas über den oberen Rand des Photovoltaikmoduls 6 hinaus. Dadurch werden diejenigen Borsten der Besenborte 19, welche über das Photovoltaikmodul 6 streichen, stärker an dieses angedrückt und es entsteht ein höherer Kehrdruck.

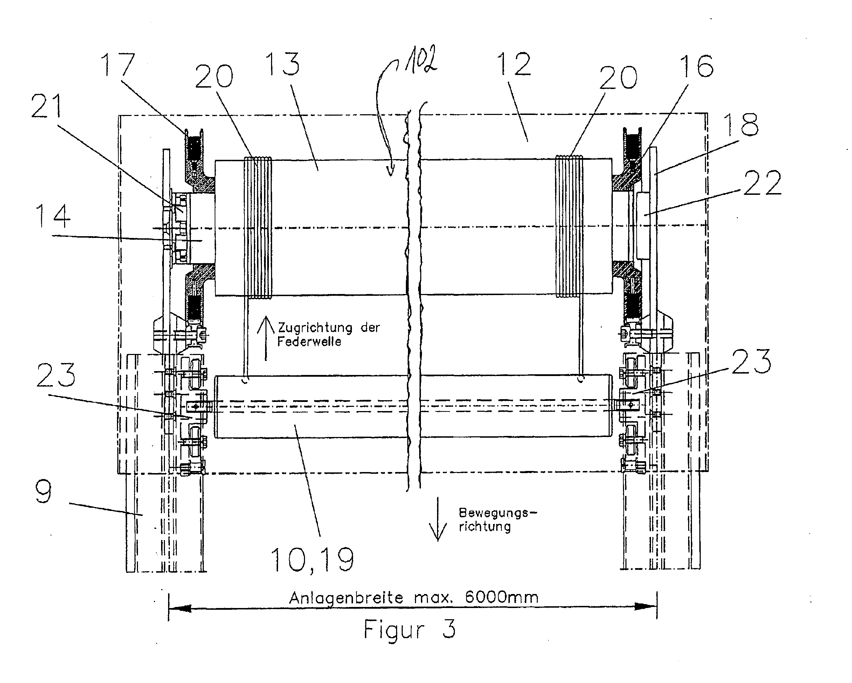

Figur 3 zeigt eine Draufsicht auf die Kehranlage nach Figur 1. Auch hier entsprechen gleiche Bezugszeichen gleichen Elementen. Bei der Montage der Anlage 100 wird die Aluwelle 13 gegen die Federkraft gespannt und es entsteht eine Zugkraft gegen die eigentliche Bewegungsrichtung des Kehrelements 24. In dieser Darstellung ist der Verlauf der Stahlseile 20 gut zu erkennen. Diese sind auf der Aluwelle 13 befestigt und aufgerollt. Jeweils ein Ende ist an dem Rohr 10, welches der Aufnahme der Besenborte 19 dient, befestigt. Bei beginnender Drehbewegung des Rohrmotors 21 setzt sich das Kehrelement 25 in Richtung "Bewegungsrichtung" in Bewegung. Es wird gleichzeitig die Welle 13 in Drehbewegung versetzt. Somit ist immer eine Gegenkraft zur Bewegungsrichtung vorhanden. Dies ermöglicht einen extrem ruhigen Lauf der Anlage.

Die Ansteuerung des Rohrmotors erfolgt in diesem Ausführungsbeispiel in Abhängigkeit eines Schneesensors 24 und eines Temperaturfühlers. Dieser Schneesensor 24 ist direkt auf einem Photovoltaikmodul 6 angeordnet und wird bei jedem Kehrzyklus abgekehrt. Dies wird durch den seitlichen Überstand des Kehrelements 25 (wie in Fig. 2 gezeigt) gewährleistet.

## Patentansprüche

1. Kehranlage (100) zum Abkehren und/oder Reinigen von Solarmodulen (6) von Solaranlagen, umfassend mindestens ein bewegbares Kehrelement (25) und eine Vorrichtung 101 zum Bewegen des Kehrelements.

2. Kehranlage (100) nach Anspruch 1, **dadurch gekennzeichnet, dass** das Kehrelement (25) in mindestens zwei, vorzugsweise zwei, entgegengesetzte Richtungen bewegbar ist.

3. Kehranlage (100) nach einem der Ansprüche 1 oder 2, **dadurch gekennzeichnet, dass** sie mindestens eine Vorrichtung zum Befestigen (4, 5) an einem festen Untergrund, insbesondere an einem mit Solarmodulen (6) bestückten Untergrund, vorzugsweise einem Dach, aufweist.

4. Kehranlage (100) nach einem der vorhergehenden Ansprüche, **dadurch gekennzeichnet, dass** das Kehrelement (25) ein länglicher Besen ist.

5. Kehranlage (100) nach einem der vorhergehenden Ansprüche, **dadurch gekennzeichnet, dass** die Vorrichtung (101) zum Bewegen des Kehrelements (25) motorbetrieben ist.

6. Kehranlage (100) nach einem der vorhergehenden Ansprüche, **dadurch gekennzeichnet, dass** die Vorrichtung (101) zum Bewegen des Kehrelements 25 ein Gegenzugsystem (102) aufweist.

7. Kehranlage (100) nach einem der vorhergehenden Ansprüche, **dadurch gekennzeichnet, dass** sie automatisch über eine Sensorik (24) gesteuert wird.

8. Kehranlage (100) nach einem der vorhergehenden Ansprüche, **dadurch gekennzeichnet, dass** sie einen Schneesensor (24) aufweist.

9. Kehranlage (100) nach einem der vorhergehenden Ansprüche, **dadurch gekennzeichnet, dass** sie einen Regensensor und einen Temperaturfühler aufweist.

10. Kehranlage (100) nach einem der vorhergehenden Ansprüche, **dadurch gekennzeichnet, dass** sie eine Vorrichtung zum Aufbringen von Wasser oder Reinigungslösung auf Solarmodule aufweist.

11. Solaranlage, **dadurch gekennzeichnet, dass** sie eine Kehranlage (100) nach einem der Ansprüche 1 bis 10 aufweist.
